# EUROPÄISCHE PATENTANMELDUNG

(11) **EP 1 193 624 A1**
(43) Veröffentlichungstag der Anmeldung: **03.04.2002**
(21) Anmeldenummer: 00121480.8
(22) Anmeldetag: 29.09.2000
(51) Int. Cl.: G06F 17/60

(54) **Qualitätsmanagementverfahren**

(71) Anmelder: SIEMENS AKTIENGESELLSCHAFT, 80333 München (DE)
(72) Erfinder: Heptner, Horst, 81371 München (DE)

(57) **Zusammenfassung**

Die Erfindung befasst sich mit einem Qulitätsmanagementverfahren das durch ein Datenverarbeitungs-Verfahren realisiert ist, zur Verwaltung des formalen Anteils der Qualitätssicherung und zur Erhebung und Auswertung von zyklischen und punktuellen Metriken in beliebigen Projekten in einem Rechnernetz mit mindestens einem Server und genau einer Datenbank, mit Client-Anwendungen für mindestens einen Qualitätssicherungs-Client (QS) und Projektteilnehmer-Clients mit getrennten Zugangsrechten, die jeweils durch ein Client-Passwort (23) erreicht werden.

## Beschreibung

Die Erfindung befasst sich mit einem Verfahren zum Qualitätsmanagement mindestens eines Projekts in einem Rechnernetz.

Bisher wurden Review- und Freigabeverfahren entweder plattform- und ortsgebunden elektronisch oder mit Hilfe von Formularen auf Papier bzw. Interleaf- oder Worddokumenten abgewickelt. Dies war sehr zeitaufwendig. In den Softwareprojekten wurden Formulare zu Revieweinladungen, Reviewprotokollen und Freigaben mit Interleaf ausgefüllt und per Hauspost verteilt. Nachdem eine flächendeckende Ausstattung mit Email in vielen Unternehmen vorlag, wurden die genannten Formulare als Attachments zu den Emails verteilt und somit ebenfalls physikalisch dupliziert. Diese Formulare enthielten viel redundante Informationen und das Ausfüllen war sehr fehleranfällig. Der Verteiler in der Email entsprach oft nicht dem aktuellen Verteiler im Formular. Weiterhin mussten Ort und Abteilung zusätzlich zum Namen immer angegeben werden. Namen, Pfade und Versionen der Dateien mussten im Formular eingetippt werden. Diese waren somit physikalisch sowohl im Configuration Management als auch in den Formularen vorhanden. Diese Methode war sehr aufwendig, so dass ein Review den Veranstalter bis zu drei Stunden rein formalen Aufwandes kostete. Zusätzlich war das Verfahren dadurch beschränkt, dass die Empfänger der Formulare das entsprechende Textverarbeitungssystem installiert haben mussten, um diese öffnen, lesen und ausdrucken zu können. Durch die mit Attachments versehenen Emails waren diese sehr lang und belasteten das Netz, auf dem sie versendet wurden. Auf Seiten der Qualitätssicherung mussten die Statistiken, beispielsweise die Fehler- und Zeitstatistiken, per Hand aus den gesendeten Formularen in Exceltabellen übertragen werden.

In einem Statistikerhebungsprozess werden Fehler- und Testfallzahlen erfasst. Die Qualitätssicherung hat dafür bisher wöchentlich Erinnerungsmails an die Projektmitarbeiter geschickt, um jeden Projektmitarbeiter darauf hinzuweisen, dass er während der Testphasen seine Teststatistiken sortiert und gruppiert nach Meilensteinen und Aufgaben oder Funktionseinheiten an die Qualitätssicherung senden möge. Die Versendung der Emails geschah nicht automatisch. Außerdem schlug die Erinnerungsmail eine Form vor, die nicht selten ignoriert wurde. Auch hier mussten die gesendeten Daten manuell aus den Antwortmails in die entsprechenden Exceltabellen übertragen werden.

Aufgabe der vorliegenden Erfindung ist es daher, ein Verfahren zur Verfügung zu stellen, durch das ein Qualitätsmanagement mit geringem zeitlichen und finanziellen Aufwand möglich ist.

Die Aufgabe wird durch ein Verfahren mit den Merkmalen des Anspruchs 1 gelöst. Vorteilhafte Weiterbildungen der Erfindung sind Gegenstand der Unteransprüche.

Bei dem Datenverarbeitungs-Verfahren handelt es sich um ein Quality Management Tool (QMT). Darunter wird ein Werkzeug zur Verwaltung der formalen Anteile eines Qualitätsmanagementprozesses verstanden. Durch ein erfindungsgemäßes Verfahren wird gegenüber den bisher verwendeten Verfahren eine große Zeit- und Kostenersparnis und ein einheitliches Qualitätsgerüst für alle Projekte erzielt. Mit diesem Verfahren kann eine Vielzahl von Projekten erfasst werden, wobei es an große und kleine Projekte anpassbar ist. Mit ihm ist eine Erfassung einheitlicher und vergleichbarer Messgrößen in einem System möglich. Das erfindungsgemäße Verfahren ist betriebssystemunabhängig, wodurch Medienbrüche überwunden werden. Gegenüber den bisher in Papierform vorgenommenen Prozessen ist der Verwaltungsaufwand beim formalen Anteil erheblich reduziert, womit eine Kosten- und Zeitersparnis von bis zu 95% erzielt wird. Alle Daten sind online verfügbar, so dass sich keine Notwendigkeit ergibt, Daten sicherheitshalber lokal auf Datenträgern zu speichern, sondern dies geschieht nur in der einzigen Datenbank. Hierdurch werden besonders vorteilhaft die lokalen Speicherkapazitäten der einzelnen Projektteilnehmer weniger belastet. Dadurch wird weiterhin gewährleistet, dass alle Daten in dem jeweiligen Prozess ihre Gültigkeit haben. Durch die Eingabe eines Passworts wird gewährleistet, dass nur berechtigte Personen Zugriff zu dem Qualitätsmanagementverfahren erhalten.

Es ist vorteilhaft, wenn das Verfahren zur Planung, Durchführung, Verfolgung und/oder Prüfung von Qualitätssicherungsmaßnahmen in beliebigen Projekten verwendet wird. Unter Qualitätssicherungsmaßnahmen werden z.B. folgende Arten von Prüfungen beim Abschluss von Tätigkeiten in Projekten (Meilensteine) verstanden: Intensive Inspection, Walkthrough Review, Testmilestonedeclaration und Milestonedeclaration. Unter einem Meilenstein wird ein Tätigkeitsabschluss in einem Projekt bezeichnet, das in unterschiedliche Tätigkeiten unterteilt ist. Es handelt sich um Kontrollpunkte, die erreicht und mit einer bestimmten Prüfung abgeschlossen werden müssen. Beispiele für solche Tätigkeiten sind: Design, Code und Test. Vorteilhafterweise werden bei den genannten wichtigen Vorgängen die Projektteilnehmer durch einen Prozess gelenkt, von dem sie nicht alle Details kennen müssen. Die Akzeptanz durch die Lenkung im Prozess ist sehr hoch, da sie nachvollziehbar ist und sehr wenig Aufwand für die Projektmitarbeiter erfordert, sowie für alle gleich geregelt ist.

Weiterhin ist es vorteilhaft, wenn es zur Planung, Erhebung, Kontrolle und/oder Auswertung von punktuellen und/oder zyklischen Projekt- und Prozessmetriken verwendet wird. Dadurch werden auch für die wichtigen Prozesse bezüglich Projekt- und Prozessmetriken die gleichen Vorteile erreicht, wie oben zu den Qualitätssicherungsmaßnahmen ausgeführt.

Weiterhin ist es vorteilhaft, wenn die Eingaben, die von den Projektteilnehmer zu leisten sind, minimiert sind, bekannte bereits einmal eingegebene Daten zur Auswahl angeboten werden und/oder Vorschlagswerte dem Benutzer vorgeblendet werden und/oder veränderbar sind, die Benutzerführung streng ist und nur solche Daten durch den Projektteilnehmer veränderbar sind, die ohne Einverständnis des Qualitätsbeauftragten angepasst werden dürfen. Dadurch wird vorteilhafterweise eine Idee eines lernenden Systems realisiert. Dem Benutzer werden nur bereits einmal eingegebene Daten, die mindestens einmal in einer Eingabemaske des QMT-Admin bestätigt wurden, vergeblendet und er kann diese verändern, falls er die nötige Legitimation besitzt. Deshalb werten die in einem Zeit- und Erfolgsdruck gefangenen Projektmitarbeiter dieses Verfahren als eine Arbeitserleichterung, wodurch ebenfalls dessen Akzeptanz gesteigert werden kann. Dies führt dazu, dass die Hemmschwelle Reviews auch formal anzumelden und verfolgen zu lassen deutlich gesenkt wird. Dies führt zu einer erhbelichen Effizienzsteigerung des gesamten Qualitätsmanagementprozesses an sich.

Weiterhin ist es vorteilhaft, wenn zahlreiche Projekt- und/oder Metrikübersichten in parametrisierbarer Gestalt online erzeugt werden. Unter die genannten Übersichten fallen beispielsweise Terminpläne, Personalauslastung, Meilenstein-, Projekt- und Meilensteinabschlussberichte in Form von Formularen sowie Metrikauswertungen und -berichten. Diese sind grafisch aufbereitet und beispielsweise mit Balkengrafiken versehen. Sie können von den jeweils Berechtigten online erzeugt werden. Außerdem können Daten zu anderen Verfahren, wie beispielsweise zu Excel, exportiert werden. Durch den Vorteil zahlreicher Auswertungsmöglichkeiten ist das QMT auch für die Projektleiter sehr interessant. Die Qualitätsicherung hat in allen Tätigkeiten der formalen Qualitätsicherung eine Unterstützung und einen sehr großen Rationalisierungseffekt. Somit können durch einen deutlich geringeren Zeitaufwand mehr Projekte bearbeitet werden.

Weiterhin ist es vorteilhaft, wenn von einem zustandsgesteuerten Server automatisch erzeugte Mails, mit denen zu bestimmten Tätigkeiten im Prozess aufgerufen wird, mit direktem Link zu einer entsprechenden Erfassungs- bzw. Eingabemaske ausgestattet sind und im HTML- oder ASCII-Format ohne Anlage versandt werden. Zu den genannten Mails zählen beispielsweise Status-, Einladungs-, Aufforderungs-, Erinnerungs- und Säumnismails. Der QMT-Server erzeugt hier direkte Links auf die auszufüllenden Masken im QMT-Client, so dass der Projektmitarbeiter nach dem Anklicken des Links direkt seine Eingaben machen kann. Der Projektmitarbeiter kann diese Masken auch über die Einstiegsauswahl des QMT-Client erreichen, falls er die Mail verlegt haben sollte. Daraus ergibt sich auch, dass die Projektteilnehmer durch einen Prozess gelenkt werden, von dem sie nicht alle Details kennen müssen, wobei durch die Lenkung im Prozess die Akzeptanz seitens der Projektteilnehmer deutlich erhöht wird.

Weiterhin ist es vorteilhaft, wenn das Verfahren voll automatisiert ist, jedoch bewusst eine Lücke zum Ende der Automatisierungskette offen hält, in der für den/die Qualitätssicherer eine Prüfung der Qualität des Produktes, der Prozessrealisierung und/oder der Metriken ermöglicht wird. Durch die Lücke wird vorteilhafterweise erreicht, dass mehr Sicherheit über die Qualität des Produkts, das Leben des Prozesses durch die Projektteilnehmer und eine sichere Basis für die Auswertung der Metriken erzielt wird. Diese haben dann auch über die Projektgrenzen hinaus gleichen und vergleichbaren Charakter. Unter dem Leben des Prozesses wird das Befolgen von niedergeschriebenen Prozessvorgaben verstanden. Des Weiteren wird durch die Lücke aufgrund des bewussten Besprechens der Ergebnisse aus Reviews und Tests die Akzeptanz für die Qualitätsicherungsmaßnahmen erhöht und der Prozess kann laufend verbessert werden. Außerdem wird mehr Akzeptanz des Managements gegenüber den Metriken erreicht, die dann auch als Grundlage für Entscheidungen für unterstützende Maßnahmen innerhalb der Projekte und für die übergreifende Prozesssteuerung dienen können. Letztlich können auch zuverlässigere Aussagen zur Produktqualität gemacht werden. Durch diesen Nutzen wächst gleichzeitig wiederum, wie schon aus mehreren oben genannten vorteilhaften Weiterbildungen der Erfindung, die Akzeptanz der Projektmitarbeiter für die Statistikerfassung.

Weiterhin ist es vorteilhaft, wenn der Qualitätssicherer jederzeit im Prozess alle Daten erzeugen, ändern und löschen sowie Aktionen im Prozess anstoßen bzw. stoppen kann. Dadurch wird ein reibungsloser Ablauf innerhalb des Prozesses sichergestellt. Falls beispielsweise bei einer Einladung ein Schreibfehler in einer Email-Adresse eines Beteiligten auftritt und die Email als unzustellbar zurückkommt, kann der Qualitätssicherer eine weitere Einladung per Email verschicken und dazu die richtige, korrigierte Email-Adresse einsetzen.

Weiterhin ist es vorteilhaft, wenn das Datenverarbeitungsverfahren Onlinehilfen gibt und/oder eine Online-Prozessbeschreibung verfügbar ist. Dadurch wird vorteilhafterweise erreicht, dass die Projektmitarbeiter die Hilfestellungen direkt im gerade bedienten Tool haben, so dass sie jederzeit zu den gerade anstehenden Problemen ausreichende Hilfe bekommen. Das gesamte Verfahren wird einfacher zu handhaben und dadurch auch sicherer. Des Weiteren wird durch die Prozessbeschreibung ein leichteres Einfinden in den Prozess für sämtliche Projektmitarbeiter erzielt.

Weitere Vorteile und Einzelheiten der Erfindung werden anhand der in den Figuren dargestellten und im folgenden beschriebenen Ausführungsbeispielen erläutert. Es zeigen:
- Figur 1: ein Flussdiagramm für ein Document Control Review,
- Figur 2: ein Flussdiagramm zur Erfassung zyklischer Metriken und
- Figuren 3-10: eine zeitliche Abfolge von Masken, die bei einer Einladung zu einem Review durchlaufen werden.

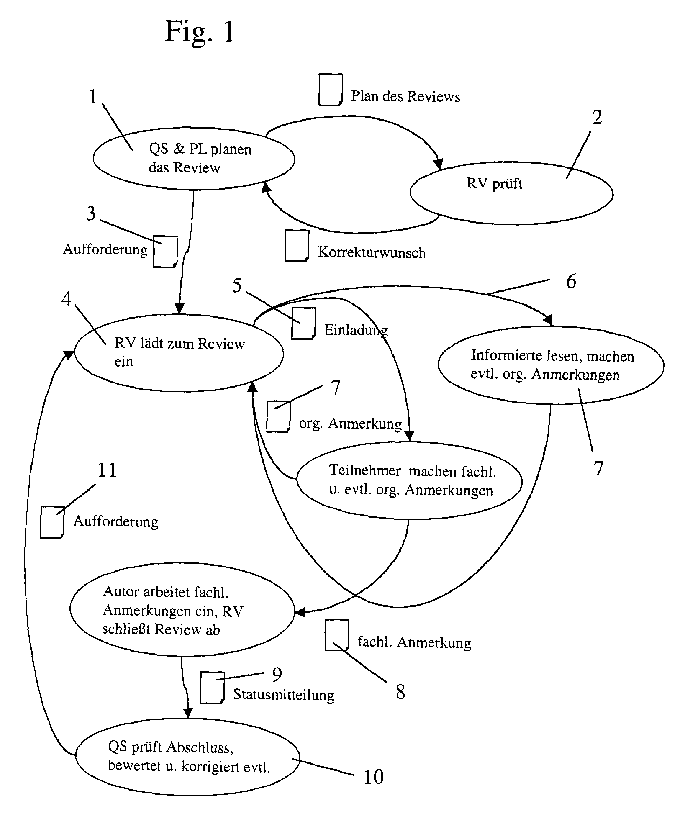

In Figur 1 ist dargestellt, wie in einer Planungsphase 1 ein Qualitätssicherer QS mit einem Projektleiter PL ein Review plant. Dazu erzeugt der Qualitätssicherer QS ein neues Projekt im QMT-Admin, dem Administrationsanteil des QMT, der nur für den Qualitätssicherer QS zugänglich ist und alle Verwaltungsarbeiten erlaubt. Im QMT-Admin werden alle Mitarbeiter, Funktionseinheiten/Aufgaben und alle zu erreichenden Meilensteine für dieses Projekt eingegeben, die Funktionseinheiten-bzw. Aufgabenverantwortlichen zugeordnet und bestimmt, welche Meilensteine von welchen Funktionseinheiten/Aufgaben mit welcher Art von Qualitätssicherungsmaßnahme abzuschließen sind und der für die Maßnahme Verantwortliche bestimmt. Außerdem können Termine angegeben werden, wie beispielsweise AFI (Available for Inspection - Zeitpunkt der Einladung zur Qualitätssicherungsmaßnahme), Reviewtermin (Zeitpunkt der Durchführung der Qualitätssicherungsmaßnahmen) und IUS (Inspected, Updated and Stored - Zeitpunkt zu dem der Reviewgegenstand freigegeben wird und der Meilenstein erreicht wird). Des Weiteren können die geplanten Teilnehmer angegeben werden. Außerdem kann ein Freitext angegeben werden, in dem beispielsweise näheres zur Grobplanung des Reviews stehen kann.

Der Qualitätssicherer QS kann jederzeit die angegebenen Planwerte ändern, Reviews absagen oder aus der Datenbank löschen. Der QMT-Server schickt dem Reviewverantwortlichen RV den Plan des Reviews. Dieser nimmt eine Prüfung 2 des Planes vor und sendet evtl. Korrekturwünsche zurück an den Qualitätssicherer QS.

Zum Zeitpunkt der Einladung 4 (AFI) zum Review durch den Reviewverantwortlichen RV sendet der QMT-Server dem Reviewverantwortlichen RV eine Aufforderung 3 in Form einer Mail zur Einladung zur Qualitätssicherungsmaßnahme mit einem direkten Link auf die Maske zur Eingabe der Einladung im QMT-Client, der Bedienoberlfäche für die Projektmitarbeiter. Der Projektmitarbeiter kann diese Maske auch über die Einstiegsauswahl des QMT-Client erreichen, falls er die Mail verlegt haben sollte.

Zur Einladung kann der Name des Reviewverantwortlichen RV, die Autoren, die Teilnehmer und die Termine (auch IUS) korrigiert werden. Die Plandaten werden dem Benutzer vorgeblendet bzw. bereits einmal eingegebene Daten werden zur Auswahl angeboten. Es werden die zu unterrichtenden Personen, die Informierten, der Ort für das Reviewmeeting, ein Stempel auf die zu reviewenden Dokumente/Sourcen/Unterlagen im Konfigurationsmanagement, die zuvor eingecheckt und mit einem Kommandozeilentool gestempelt wurden, und ein Freitextkommentar, in dem die fachlichen Zuständigkeiten und Rollen im Reviewprozess der einzelnen Reviewteilnehmer und der genauere Zeitplan eingegeben werden können.

Die Informierten bekommen vom QMT-Server eine Bekanntmachung 6 zugesandt und die Teilnehmer eine Einladung 5 in Form einer Mail, die alle zum Review notwendigen Daten und einen Link auf die Maske zur Eingabe der fachlichen Kommentare im QMT-Client enthält. Im Freitextfeld sind die Kommentare abzugeben. Aufwands- und Fehlermetriken werden in Pflichtfeldern erfragt. Der Projektmitarbeiter kann diese Maske auch über die Einstiegsauswahl des QMT-Client erreichen, falls er die Mail verlegt haben sollte. Einen Tag vor dem Abgabetermin für Kommentare zu einem Document Control Review wird der säumige Teilnehmer mit einer gleichartigen Säumnismail vom QMT-Server automatisch angeschrieben.

Sowohl die Informierten als auch die Teilnehmer können zum Reviewgegenstand zu jedem Zeitpunkt während der Durchführung einer Qualitätssicherungsmaßnahme Kommentare abgeben. Zwischen der Planung und Freigabe eines Reviews können zusätzlich organisatorische Anmerkungen 7 zu Reviewplanung, Ablauf oder sonstigem abgegeben werden. Diese werden nur an Qualitätssicherer QS oder auch zusätzlich an alle Teilnehmer und den Reviewverantwortlichen RV (hier dargestellt) adressiert. Die fachlichen Anmerkungen 8 von den Teilnehmern werden an den Autor geschickt. Der Autor arbeitet die fachlichen Anmerkungen ein. Der Reviewverantwortliche RV erhält nach Erstellen der Einladung vom QMT-Server eine Mail mit einem direkten Link auf die Maske im QMT-Client zur Eingabe der Release Note, mit der ein Review abgeschlossen wird. Diese Maske kann vom Reviewverantwortlichen RV auch über die Einstiegsauswahl des QMT-Client erreicht werden, falls er die Mail verlegt haben sollte.

Zum Abschluss werden die überarbeiteten Dokument/Sourcen/Unterlagen in das Konfigurationsmanagement eingecheckt und mit Hilfe eines Kommandozeilentools mit dem angemessenen Freigabestatus und mit einem Stempel versehen, der in die Abschlussmaske im QMT-Client eingetragen wird. Außerdem kann ein Freitext zur Angabe von Auflagen/Einschränkungen/Besonderheiten erfolgen. Das Datum der Freigabe wird angegeben und Mengen-, Aufwands- und Fehlermetriken erfragt.

Nach Absenden der Freigabemeldung wird dem Qualitätssicherer QS eine Statusmitteilung 9 in Form einer Mail durch den QMT-Server zugestellt, in der ein direkter Link auf die Maske im QMT-Client zur Überprüfung 10 der Release Note enthalten ist. Der Qualitätssicherer QS kann diese Maske auch über die Einstiegsauswahl des QMT-Client erreichen, falls er die Mail verlegt haben sollte.

An diesem Punkt kann der Qualitätssicherer QS die Ergebnisse der Qualitätssicherungsmaßnahme prüfen, Interviews mit dem Reviewverantwortlichen RV und/oder den Teilnehmern führen und beispielsweise die Metrikwerte und/oder die Freigabetexte überarbeiten und das Review freigeben, den Meilenstein erklären oder ein Folgereview veranlassen.

Das Folgereview wird durch eine Aufforderung 11 an den Reviewverantwortlichen RV eingeleitet. Der Reviewverantwortliche RV lädt danach wieder zum Review ein, wie dies oben im Schritt "Einladung 4" beschrieben wurde. Es schließen sich die oben ausgeführten Schritte an, bis eine Freigabe durch den Qualitätssicherer QS erfolgt.

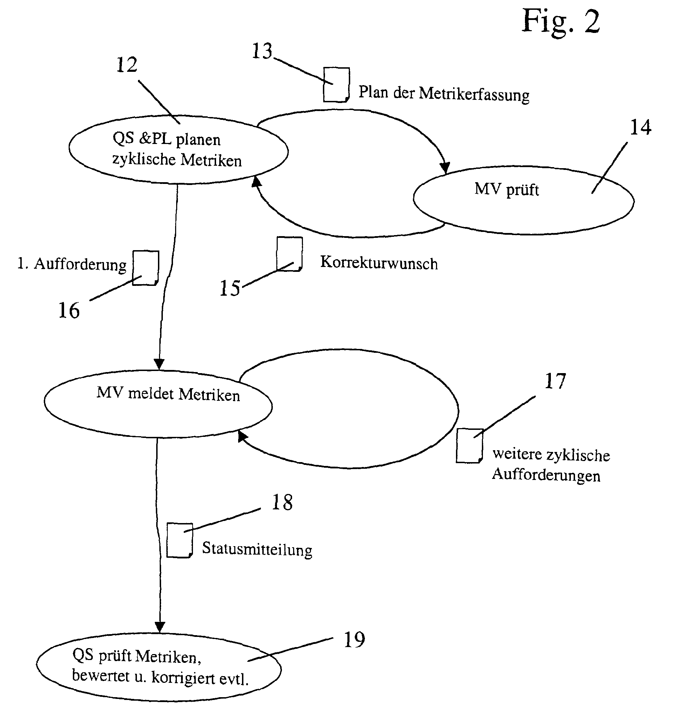

Unter die Erfassung von zyklischen Metriken, wie in Figur 2 dargestellt, fallen beispielsweise Testmetriken, insbesondere Testfall- und Fehlerstatistiken. Es findet eine Planung 12 der Fassung einer zyklischen Metrik durch den Qualitätssicherer QS und den Projektleiter PL statt. Dies umfasst die Zuordnung der Art der zu erhebenden Metrikdaten zu den Zeitpunkten, d.h. Meilensteinen, der entsprechenden Funktionseinheiten und Aufgaben in einem Projekt, und den Erhebungszyklen, angegeben durch einen Startzeitpunkt und das Intervall der Erhebung. Außerdem wird der Metrikverantwortliche MV, der jeweils für die einzelnen Erhebungen verantwortliche Projektmitarbeiter, benannt. Der Metrikverantwortliche MV erhält einen Plan der Metrikerfassung 13 und unterzieht diesen einer Prüfung 14. Eventuell meldet er Korrekturwünsche 15 zurück an den Qualitätssicherer QS und den Projektleiter PL.

Nachdem die Planung abgeschlossen ist, erhält der Metrikverantwortliche MV zum ersten Erfassungszeitpunkt durch den QMT-Server eine erste Aufforderung 16 per Mail, die eine Erläuterung und einen direkten Link zur Erfassungsmaske im QMT-Client, der Bedienoberfläche für die Projektmitarbeiter, enthält. Der Projektmitarbeiter kann diese Maske auch über die Einstiegsauswahl des QMT-Client erreichen, falls er die Mail verlegt haben sollte. Dem Projektmitarbeiter werden bei der zyklischen Erfassung alle in den vergangenen Erfassungsintervallen eingegebenen Daten nur lesbar vorgeblendet. Dies geschieht in Tabellen oder auch in balkengrafischer Form und die neuen Daten können in Pflichtfeldern eingegeben werden, wobei das Soll-Datum automatisch erzeugt wird und nicht zu ändern ist, dagegen das Ist-Datum zur Korrektur vorgeblendet wird.

Sollte der Termin der Erfassung vom Projektmitarbeiter übersehen worden und die Eingabe der Daten nicht erfolgt sein, gibt es einen Tag nach dem Erfassungszeitpunkt eine Säumnismail. Die weiteren zyklischen Aufforderungen 17 weisen die gleichen Eigenschaften wie die erste Aufforderung 16 auf.

Bei Ende der Erfassung markiert der Metrikverantwortliche MV die letzte Erfassung mit einem Endekennzeichen und der QMT-Server sendet anschließend eine Statusmitteilung 18 an den Qualitätssicherer QS. Diese enthält einen Link auf die QS-Kontrollmaske im QMT und erlaubt eine abschließende Prüfung und Bewertung. Eventuell sind nach Interviews mit dem Metrikverantwortlichen MV Werte anzupassen oder Fehler zu korrigieren. Sollte die Mail verloren gegangen sein, kann die Korrekturmaske auch über die Menüführung im QMT erreicht werden. Daran anschließend kann der Qualitätssicherer QS zahlreiche parametrisierbare Metrikauswertungen und -berichte anzeigen und ausdrucken lassen.

Neben der Erfassung zyklischer Metriken, wie in Figur 2 dargestellt, ist es genauso gut möglich, punktuell erhobene Statistiken, wie beispielsweise Reviewmetriken, insbesondere Zeit-, Mengen- und Fehlerstatistiken, zu erfassen.

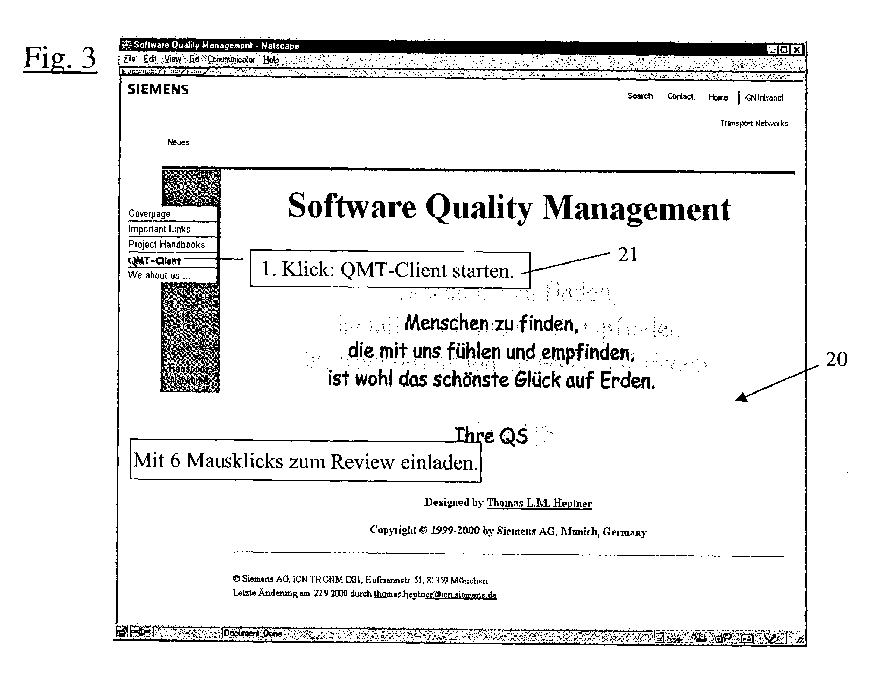

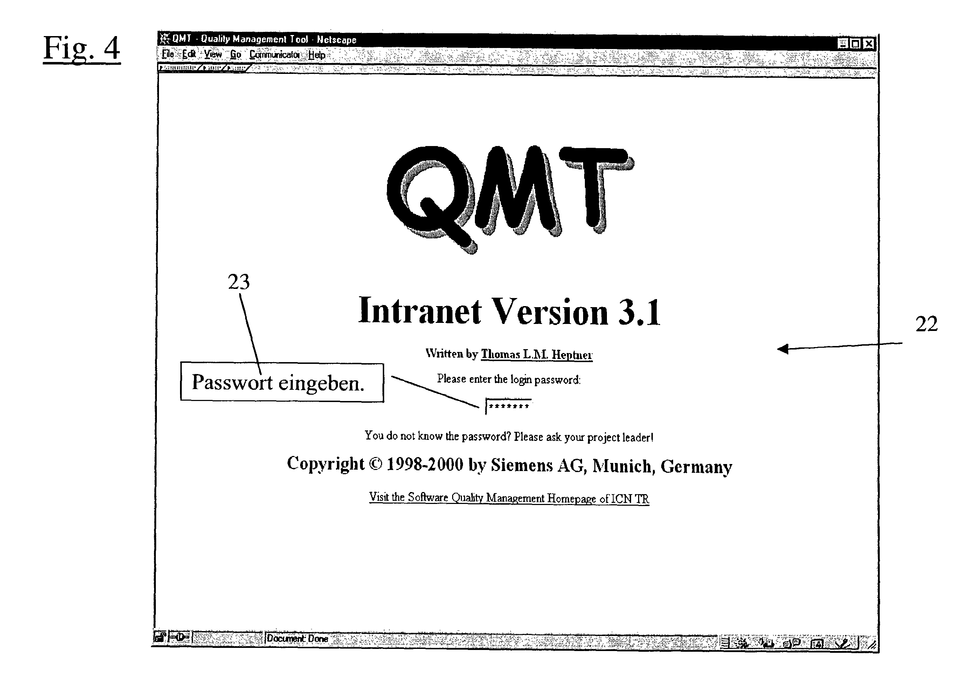

Anhand der in den Figuren 3 bis 10 dargestellten Screenshots wird im folgenden die Einladung zu einem Review nachvollzogen. Dazu wird auf einen entsprechenden Link auf der in Figur 3 dargestellten ersten Benutzeroberfläche 20 eines Intranets in einem beliebigen Browser, z.B. in Netscape oder Explorer, geklickt. Mit diesem ersten Klick 21 wird ein QMT-Client gestartet, der die Benutzer-Schnittstelle zum Projektmitarbeiter darstellt. Daraufhin baut sich eine in Figur 4 dargestellte zweite Benutzeroberfläche 22 auf, in der ein Passwort 23 eingegeben werden muss.

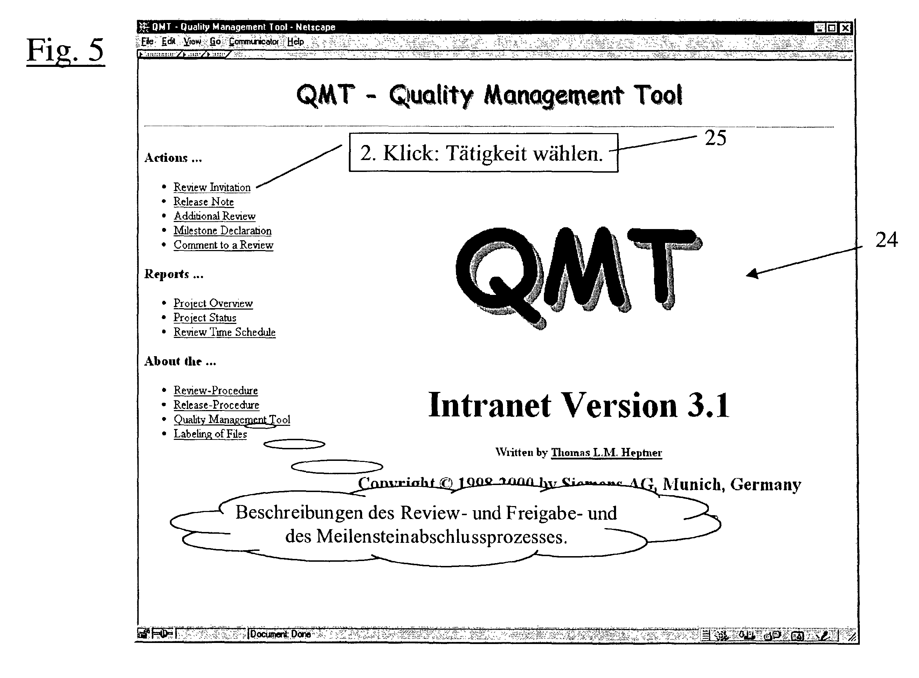

Ist das Passwort 23 korrekt, so baut sich eine in Figur 5 dargestellte dritte Benutzeroberfläche 24 auf, bei der mit einem zweiten Klick 25 die gewünschte Tätigkeit ausgewählt wird. Die einzelnen Links sind dabei zu Themengruppen zusammengefasst. Beispielsweise sind unter der Gruppe "Actions" die folgenden Tätigkeiten auswählbar: "Einladung zu einem Review", "Freigabeerklärung", "zusätzliches Review", "Abschluss eines Meilensteins" und "Kommentar zu einem Review". Unter der Rubrik "Reports" können ausgewählt werden: "Project Overview", "Project Status" und "Review Time Schedule". Außerdem sind auf der Benutzeroberfläche Beschreibungen des Review- und Freigabeprozesses, des QMT, des "Labeling of Files", des Meilensteinabschlussprozesses und des Metrikprozesses online abfragbar.

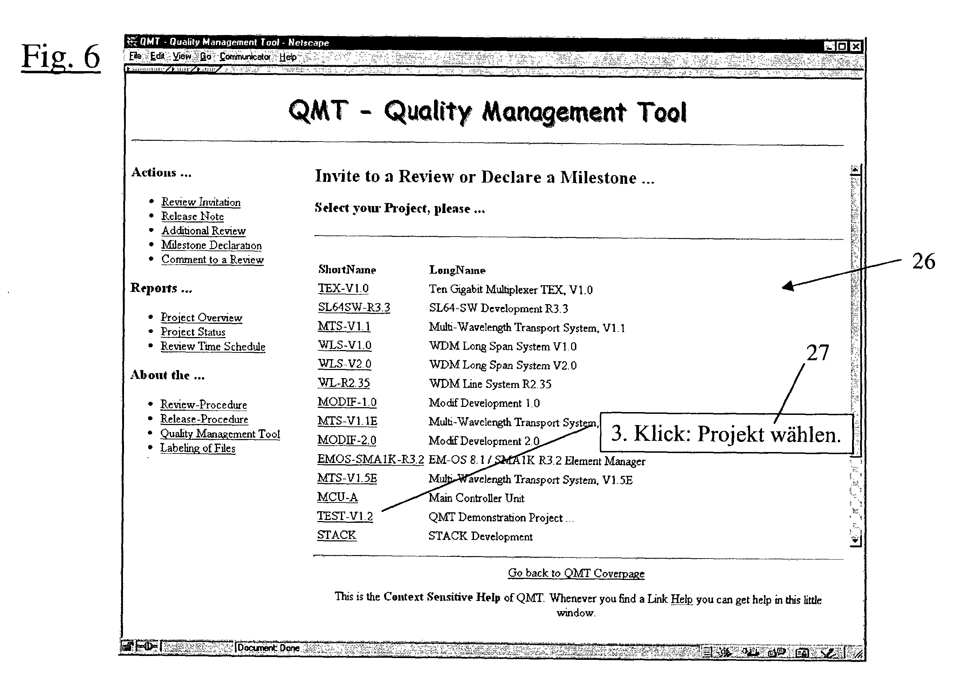

Nachdem durch den zweiten Klick 25 eine bestimmte Tätigkeit, im Ausführungsbeispiel die Einladung zu einem Review, ausgewählt wurde, baut sich eine in Figur 6 dargestellte vierte Benutzeroberfläche 26 auf. Darauf sind sämtliche zur Zeit anhängigen Software-Projekte sowohl in ihrer Kurzbezeichnung als auch mit ihrem ausführlichen Namen angegeben. Außerdem ist noch eine kontextsensitive Hilfe über einen Link möglich. Durch diese kann der Benutzer des Verfahrens jeweils für den gerade vorzunehmenden Schritt interessante und instruktive Anweisungen erhalten.

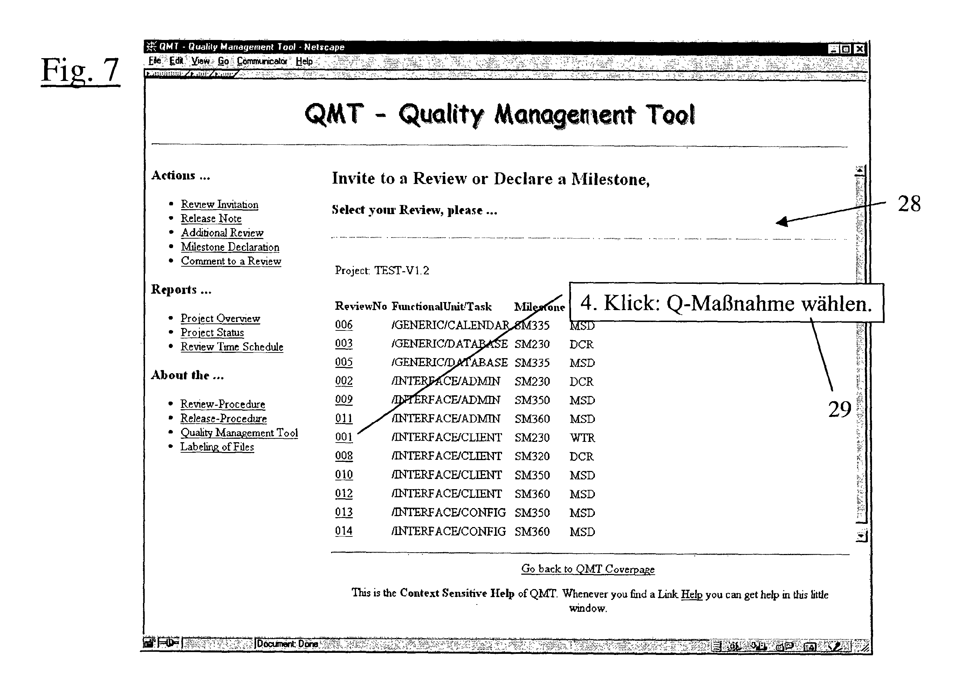

Mit einem dritten Klick 27 wird dasjenige Projekt ausgewählt, zu dem die Einladung ausgesprochen werden soll. Danach wird eine in Figur 7 dargestellte fünfte Benutzeroberfläche 28 aufgebaut, in der die Angaben zu dem ausgewählten Projekt vorliegen. Dies sind die Reviewnummer, die Funktionseinheit, die Aufgabe, der Meilenstein sowie der Typ des geplanten Reviews. Der Benutzer kann die gewünschte Qualitätsmaßnahme nach Aufgabe und Meilenstein auswählen.

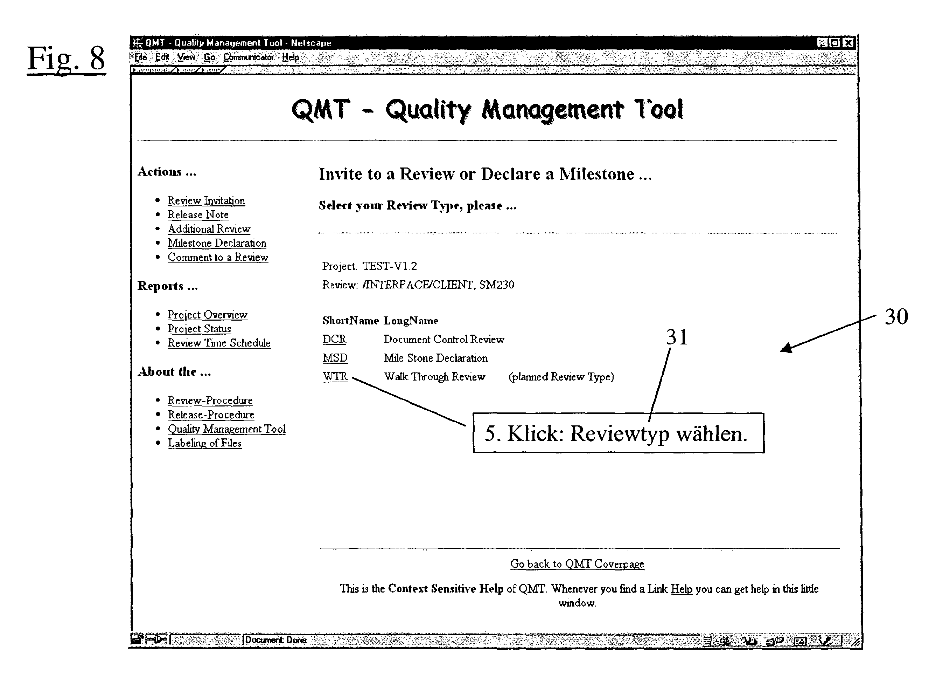

Dies geschieht mit einem vierten Klick 29 auf den entsprechenden Link. Danach baut sich eine in Figur 8 dargestellte sechste Benutzeroberfläche 30 auf, auf der die Abkürzung sowie die ausführliche Bezeichnung des Reviewtyps angegeben ist. Dies sind beispielsweise: DCR für Document Control Review, MSD für Mile Stone Declaration und WTR für Walk Through Review. Durch den Eingeladenen ist damit ein nachträgliches Ändern des Typs der Qualitätsmaßnahme möglich.

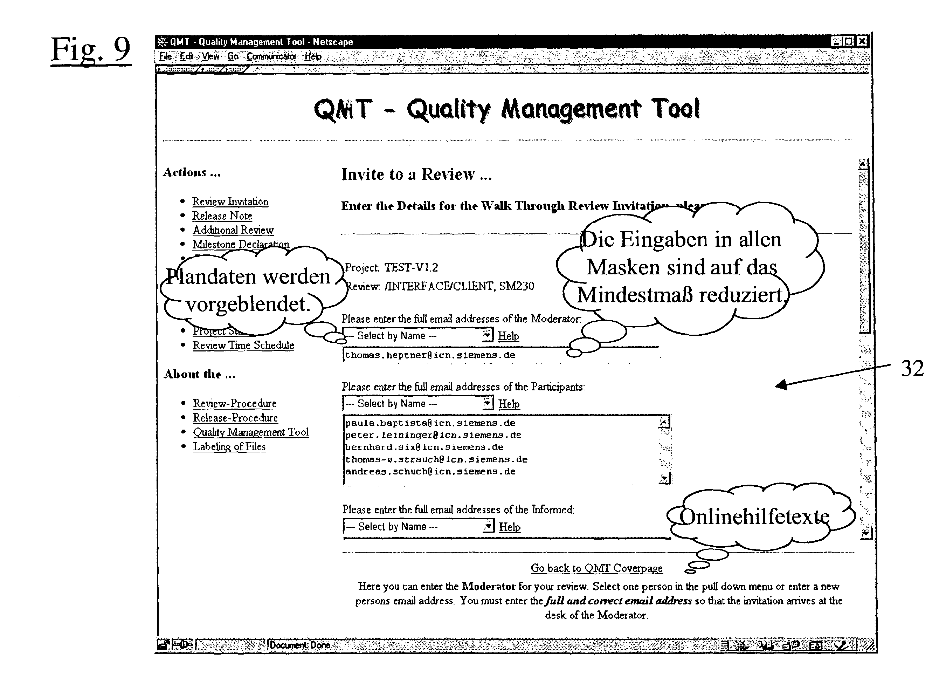

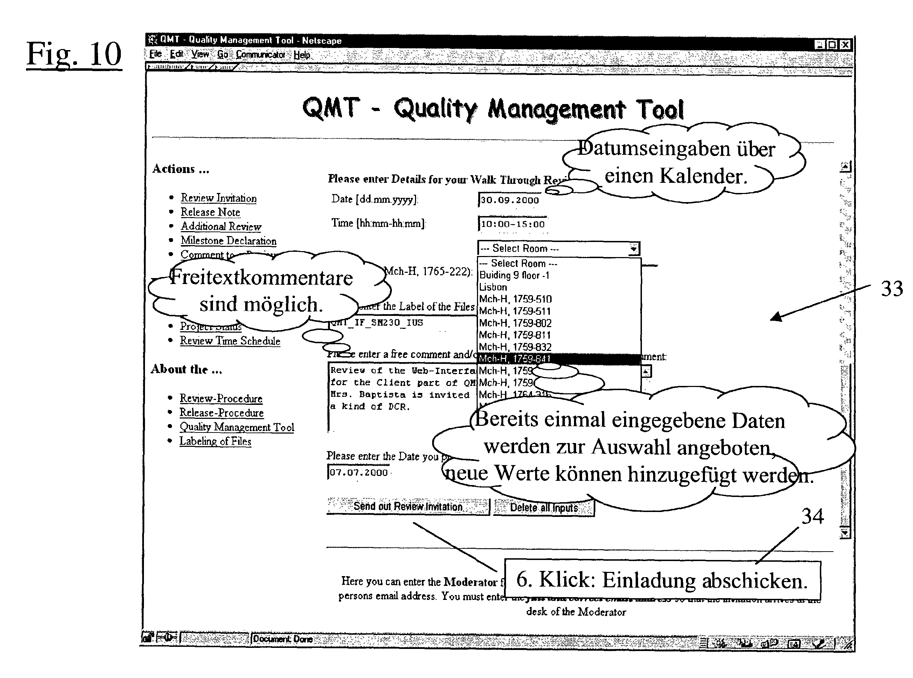

Dafür wählt er mit einem fünften Klick 31 den Reviewtyp aus. Daraufhin baut sich eine in Figur 9 dargestellte siebente Benutzeroberfläche 32 auf. In dieser muss der Benutzer die Emailadresse des Moderators, der Beteiligten und der Informierten in einer Maske eingeben. Die Eingaben sind dabei auf das Mindestmaß reduziert, damit möglichst wenig Fehler auftreten. Dabei ist es möglich, die Personen jeweils nur durch Anklicken aus einem alphabetisch geordneten Register auszuwählen bzw. frei zu editieren. Außerdem sind noch das Datum sowie die Uhrzeit des geplanten Reviews anzugeben. Diese sind zur Vereinfachung über einen Kalender auswählbar. Eine Eingabe des geplanten Besprechungsraumes kann ebenfalls über eine alphabetisch geordnete Liste durch Anklicken angewählt werden und ist frei editierbar. Außerdem kann das Label eines Files angegeben werden. In einer Maske 33 kann ein Freitextkommentar vom Benutzer eingegeben werden, wie dies in Figur 10 dargestellt ist.

Durch einen sechsten Klick 34 wird die Einladung an sämtliche in den Masken eingegebenen Beteiligten abgeschickt. Ein Bestätigungsformular wird zum Ausdruck angeboten.

Durch diese einfache Führung an Hand von Links und Eingabemasken, in denen der gewünschte Eintrag durch einfaches Anklicken möglich ist, wird eine Führung des Benutzers vorgenommen, die so gut wie keine Fehlbedienung zulässt. Durch diese Art der Benutzerführung ist außerdem ein schnelles und mit wenig Aufwand verbundenes Qualitätsmanagement möglich, das von den Benutzern auf Grund der Straffung des Prozesses und der Verwendung des QMT akzeptiert wird.

### Bezugszeichenliste

- 1: Planung
- 2: Prüfung
- 3: Aufforderung
- 4: Einladung
- 5: Einladung
- 6: Bekanntmachung
- 7: Organisatorische Anmerkung
- 8: Fachliche Anmerkung
- 9: Statusmitteilung
- 10: Überprüfung
- 11: Aufforderung
- 12: Planung
- 13: Metrikerfassung
- 14: Prüfung
- 15: Korrekturwunsch
- 16: Aufforderung
- 17: weitere zyklische Aufforderung
- 18: Statusmitteilung
- 19: Bewertung der Metrik
- 20: Erste Benutzeroberfläche
- 21: Erster Klick
- 22: Zweite Benutzeroberfläche
- 23: Passwort
- 24: Dritte Benutzeroberfläche
- 25: Zweiter Klick
- 26: Vierte Benutzeroberfläche
- 27: Dritter Klick
- 28: Fünfte Benutzeroberfläche
- 29: Vierter Klick
- 30: Sechste Benutzeroberfläche
- 31: Fünfter Klick
- 32: Siebente Benutzeroberfläche
- 33: Maske
- 34: Sechster Klick
- MV: Metrikverantwotlicher
- PL: Projektleiter
- QS: Qualitätssicherer
- RV: Reviewverantwortlicher

## Patentansprüche

1. Qualitätsmanagementverfahren, das durch ein Datenverarbeitungs-Verfahren realisiert ist, zur Verwaltung des formalen Anteils eines Qualitätssicherungsprozesses und zur Erhebung und Auswertung von zyklischen und punktuellen Metriken in beliebigen Projekten in einem Rechnernetz mit mindestens einem Server und genau einer Datenbank, mit Client-Anwendungen für mindestens einen Qualitätssicherung-Client (QS) und Projektteilnehmer-Clients mit getrennten Zugangsrechten, die jeweils durch ein individuelles Client-Passwort (23) erreicht werden.

2. Verfahren nach dem vorstehenden Anspruch, **dadurch gekennzeichnet, dass** es zur Planung, Durchführung, Verfolgung und/oder Prüfung von Qualitätssicherungsprozessen in beliebigen Projekten verwendet wird.

3. Verfahren nach Anspruch 1, **dadurch gekennzeichnet, dass** es zur Planung, Erhebung, Kontrolle und/oder Auswertung von punktuellen und/oder zyklischen Projekt- und Prozessmetriken verwendet wird.

4. Verfahren nach einem der vorstehenden Ansprüche, **dadurch gekennzeichnet, dass** die Eingaben, die von den Projektteilnehmer-Client zu leisten sind, minimiert sind, bekannte bereits einmal eingegebene Daten zur Auswahl angeboten werden und/oder Vorschlagswerte dem Benutzer vorgeblendet werden und/oder veränderbar sind, die Benutzerführung streng ist und nur solche Daten durch den Projektteilnehmer-Client veränderbar sind, die ohne Einverständnis des Qualitätsbeauftragten angepasst werden dürfen.

5. Verfahren nach einem der vorstehenden Ansprüche, **dadurch gekennzeichnet, dass** zahlreiche Projekt- und/oder Metrikübersichten in parametrisierbarer Gestalt online erzeugt werden.

6. Verfahren nach einem der vorstehenden Ansprüche, **dadurch gekennzeichnet, dass** von einem zustandsgesteuerten Server automatisch erzeugte Mails, mit denen zu bestimmten Tätigkeiten im Prozess aufgerufen wird, mit direktem Link zu einer entsprechenden Erfassungs- bzw. Eingabemaske ausgestattet sind und im HTML- oder ASCII-Format ohne Anlage durch den zustandsgesteuerten Server automatisch versandt werden.

7. Verfahren nach einem der vorstehenden Ansprüche, **dadurch gekennzeichnet, dass** es voll automatisiert ist, jedoch bewusst eine Lücke zum Ende der Automatisierungskette offen hält, in der für den/die Qualitätssicherungs-Client (QS) eine Prüfung der Qualität des Produktes, der Prozessrealisierung und/oder der Metriken ermöglicht wird.

8. Verfahren nach einem der vorstehenden Ansprüche, **dadurch gekennzeichnet, dass** der Qualitätssicherungs-Client (QS) jederzeit im Prozess alle Daten erzeugen, ändern und löschen sowie Aktionen im Prozess anstoßen bzw. stoppen kann.

9. Verfahren nach einem der vorstehenden Ansprüche, **dadurch gekennzeichnet, dass** das Datenverarbeitungsverfahren Onlinehilfen gibt und/oder eine Online-Prozessbeschreibung verfügbar ist.
